# EUROPÄISCHE PATENTSCHRIFT

(11) **EP 3 931 500 B1**
(45) Veröffentlichungstag und Bekanntmachung des Hinweises auf die Patenterteilung: **17.07.2024**
(21) Anmeldenummer: 20707345.3
(22) Anmeldetag: 10.02.2020
(51) Int. Cl.: F24H 1/14, F24H 9/18, H05B 3/16

(54) **ELEKTRISCHER HEIZSTAB UND ENERGIESPEICHER**
ELECTRIC HEATING ROD AND STORED ENERGY SOURCE
BARRE CHAUFFANTE ÉLECTRIQUE ET ACCUMULATEUR D'ÉNERGIE

(30) Priorität: 26.02.2019 AT 5002319 U
(43) Veröffentlichungstag der Anmeldung: 05.01.2022
(73) Patentinhaber: Gratz, Michael, 8055 Graz (AT); Pink, Werner, 8665 Langenwang (AT)
(72) Erfinder: Gratz, Michael, 8055 Graz (AT); Pink, Werner, 8665 Langenwang (AT)
(74) Vertreter: Schwarz & Partner Patentanwälte GmbH
(86) Internationale Anmeldenummer: PCT/AT2020/060039
(87) Internationale Veröffentlichungsnummer: WO 2020/172697

(56) Entgegenhaltungen:
- WO-A1-2014/127538
- DE-A1- 102012 112 962
- DE-A1- 2 339 096
- GB-A- 2 512 024
- GB-A- 730 616
- GB-A- 857 909
- US-A- 4 948 948
- US-A1- 2016 195 284

## Beschreibung

Die vorliegende Erfindung betrifft einen elektrischen Heizstab, insbesondere einen Schichtladeheizstab, für einen Energiespeicher, gemäß dem Oberbegriff des Anspruchs 1. Weiters betrifft die vorliegende Erfindung einen Energiespeicher mit einem Innenraum für zu erwärmendes bzw. warmzuhaltendes flüssiges Medium, wobei zumindest ein elektrischer Heizstab im Innenraum des Energiespeichers angeordnet ist.

Aus dem Stand der Technik sind elektrisch betriebene Heizstäbe bekannt, die fest an einer bestimmten Einbauposition in einen Warmwasserbehälter oder -speicher eingebracht sind. Der Einbau des Heizstabs erfolgt bei Warmwasserspeichern mit geringem Volumen, die üblicherweise als Hängespeicher bezeichnet werden, vorzugsweise in vertikaler Ausrichtung. Die Heizleistung der Heizstäbe wird dabei immer im Bereich der Einbauposition an das Wasser abgegeben.

Jedoch ist die Effizienz dieser örtlich fixierten Beheizung stark vermindert, unter anderem aufgrund der Konvektion, die sich anhand des Temperaturgefälles zwischen der Wasserschicht, in die der Heizstab seine Energie abgibt, und den oberen, bereits erwärmten beziehungsweise den unteren, kälteren Wasserschichten einstellt. Dies führt zu einer Entmischung der oberen Wasserschichten und zur Ausbildung einer Mischtemperatur. Bei derartigen Systemen kommt es folglich nicht zu einer Entnahme von Wasser mit der höchsten Temperatur, sondern zur Entnahme von Wasser, das eine unzureichende Temperatur aufweist, wodurch die Anforderungen an Komfort und Hygiene nicht erfüllt sind. Außerdem werden die oberen, bereits erwärmten Wasserschichten wieder abgekühlt.

Um dem Problem der Schichtentmischung entgegenzuwirken, werden im Stand der Technik Heizstäbe mit entsprechend großer Heizleistung eingesetzt. Durch die kürzere Aufheizzeit wird so die gewünschte Speichertemperatur schneller erreicht und die Zeit, in der Schichtentmischung auftreten kann, verkürzt. Dies hat jedoch zur Folge, dass der Eigenertrag (Nettoenergieertrag) eines entsprechenden Energiespeichersystems entsprechend geschmälert wird, insbesondere wenn die Energieerzeugung von erneuerbaren Energieträgern wie Sonne oder Wind stammt, die, über den Tagesverlauf betrachtet, erheblichen Ertragsschwankungen unterliegen können und ökonomisch nicht auf Spitzenentnahmeleistungen ausgelegt sind. Folglich führen die konventionelle Heizstäben, deren Heizleistung an den Ertrag von diskontinuierlichen Energieerzeugern angepasst wird, wiederum zu einer unerwünscht langen Zeit, in der Schichtentmischung auftreten kann.

Die aus dem Stand der Technik bekannten, elektrisch betriebenen Heizstäbe sind im Wesentlichen als Widerstandsheizelemente ausgebildet, die sich in ihrem Aufbau unterscheiden. Es gibt Widerstandsheizelemente, die auf einem Basisträgersockel, bevorzugt für eine Flansch- bzw. Einschraubverbindung, aufgebaut sind und einen fix verbauten, sogenannten Tauchheizkörper bilden, der direkt im zu erwärmenden Medium eingebracht ist. Ein Lösen dieser Tauchheizkörpereinheit bzw. ein Austausch erfolgt als Kompletteinheit über den Basisträgersockel, der mit dem Speicher dicht verbunden ist. Somit geht das Lösen bzw. Austauschen der Tauchheizkörpereinheit immer mit der Entleerung des Mediums im Speicher einher. Tauchheizkörper stellen den überwiegenden Anteil der sich am Markt befindlichen Heizstäbe dar. Eine andere Gruppe von Heizstäben bilden die sogenannten Heizpatronen. Sie sind im Gegensatz zum Tauchheizkörper nicht fix an einem Trägersockel angebracht, sondern in ein fix im Speicher verbautes, zum Medium hin geschlossenes Schutzrohr eingeschoben. Der Kontakt der Heizstäbe zum Medium besteht im Gegensatz zum Tauchheizkörper nicht direkt, sondern die Wärmeabgabe erfolgt indirekt über das Schutzrohr. Daher ist ein Lösen bzw. ein Austausch der Heizpatrone möglich, ohne die Dichtheit des Speichers zu beeinträchtigen bzw. das Medium zu entleeren.

Bei Warmwasserbehältern mit größeren Volumina, die üblicherweise als Standspeicher bezeichnet werden, erfolgt der Einbau des Heizstabs vorzugsweise in horizontaler Ausrichtung. Auch werden bei diesen Systemen, wenn es die Behältergeometrie ermöglicht, mehrere einzelne Heizstäbe in Einbaupositionen unterschiedlicher Höhe in den Speicher eingebracht. Dies soll obigem Problem der Schichtentmischung entgegenwirken, führt jedoch zu einigen Nachteilen, die mit der erhöhten Anzahl verbauter Heizstäbe einhergehen, beispielsweise der konstruktive Mehraufwand, insbesondere bei der Dämmung des Speichers, die erhöhte Dichtigkeitsproblematik sowie der zusätzliche Revisionsbedarf. Aus der Anmeldung WO2010/031994 ist es bekannt, Tauchheizkörper in unterschiedlicher Höhenlage waagrecht zu verbauen, um zonenweise eine temperaturgeschichtete Beheizung des Speicherinhalts zu ermöglichen. Diese Möglichkeit beschränkt sich jedoch in der Praxis auf einen Standspeicher in einer Heizzentrale, dessen servicebedingte Zugänglichkeit der Tauchheizkörper und dessen optische Gefälligkeit unerheblich sind. Der Einsatz von aus der WO2010/031994 bekannten Tauchheizkörpern in kompakten dezentralen Hängespeichern, die im Wohnbereich verwendet werden, ist aufgrund der angesprochenen Probleme bzw. aufgrund eines dadurch verursachten Mehraufwands jedoch unrealistisch.

Das Dokument DE 23 39 096 A1 beschreibt einen Durchlauferhitzer, bei dem alle Heizkörper jeweils einen ihnen zugeordneten Flüssigkeitskanal aufweisen. Alle Flüssigkeitskanäle sind senkrecht parallel zueinander angeordnet und zu einem einzigen Mäander verbunden. Der Durchlauferhitzer weist nur eine einzige, durch alle Flüssigkeitskanäle (6) gebildete Heizzone auf, durch den alles Wasser strömt. Das in einem Hohlraum des Durchlauferhitzers gespeicherte erhitzte Wasser wird nicht beheizt.

Das Dokument GB 730 616 A zeigt einen klassischen elektrischen Wendelheizstab mit einer einzigen Heizzone. Die Dokumente GB 2 512 024 A und GB 857 909 A zeigen Warmwasserspeicher mit unterschiedlich langen Heizeinsätzen zur Erzielung unterschiedlicher Heizzonen im Warmwasserspeicher.

Das Dokument GB 2512024 A offenbart die Erzeugung einer Temperaturschichtbeladung in einem Warmwasserspeicher durch einen Tauchheizkörper, der senkrecht auf einen Trägersockel stehend fix verbaut ist. Die Tauchheizkörperausführung wird einerseits als U-förmige, Seite an Seite gereihte Anordnung von Heizelementen beschrieben, aufgebaut auf einen Trägersockel, um eine einfache getrennte elektrische Anbindung der Heizelemente zu erhalten. Diese Lösung erfordert aufgrund der gegebenen beschränkten Platzsituation eher geringe Abstände der U-Rohre, wodurch es aufgrund einer unvermeidlichen Kalkabscheidung an den Tauchheizkörpern zu einer sogenannten Kalkbrückenbildung über die Reihe an Reihe verbauten Heizstäben kommen kann, was zu einer Beeinträchtigung der Wärmeabgabe führt. Als weitere Ausführung ist in diesem Dokument ein Tauchheizkörper beschrieben, dessen Heizelemente seriell gereiht sind, wobei dessen elektrisch getrennte Anbindung nur schematisch abgebildet ist und eine solche elektrisch getrennte Anbindung aufgrund der notwendigen hitzeisolierten Anbindung zum jeweilig getrennt aktivierbaren Heizelement mit einem erheblichen konstruktiven Mehraufwand verbunden ist.

Es ist die Aufgabe der vorliegenden Erfindung, einen elektrischen Heizstab zur Verfügung zu stellen, der die aus dem Stand der Technik bekannten Nachteile zumindest vermindert. Insbesondere ist es eine Aufgabe der Erfindung einen Schichtladeheizstab bereitzustellen, der es ermöglicht, einen Warmwasserbereiter optimal mit Sonnenstrom über den ganzen Tag zu versorgen, ohne die Temperaturschichten des Wassers im Speicher zu verwirbeln und damit den Schichtaufbau der unterschiedlichen Temperaturschichten zu zerstören. Der Heizstab soll besonders für Hängespeicher geeignet sein.

Diese Aufgabe wird durch einen Heizstab mit den Merkmalen des Anspruchs 1 sowie durch einen Energiespeicher mit den Merkmalen des Anspruchs 13 gelöst. Vorteilhafte Ausgestaltungen der Erfindung ergeben sich aus den Unteransprüchen und der Beschreibung.

Der erfindungsgemäße elektrische Heizstab ist zum Einbau in einen Energiespeicher vorgesehen, wodurch der Innenraum des Energiespeichers in unterschiedliche Teilschichtbereiche unterteilt ist und jeder Teilschichtbereich des Energiespeichers von einer Heizzone des elektrischen Heizstabs beheizbar ist. Der erfindungsgemäße elektrische Heizstab weist unabhängig voneinander ansteuerbare Heizzonen auf, die in Längserstreckung des Heizstabs gesehen nacheinander angeordnet sind, wobei in jeder Heizzone zumindest ein elektrisches Heizelement angeordnet ist und die elektrischen Heizelemente unterschiedlicher Heizzonen unabhängig voneinander mit elektrischer Energie versorgbar sind. Jede Heizzone weist zumindest einen Trägerkörper aus einem elektrisch isolierenden und gegenüber den von den Heizelementen erzeugten Temperaturen stabilen Material, vorzugsweise Keramik, auf, wobei der Trägerkörper nach außen offene Längsnuten aufweist, deren Querschnittsform zur Aufnahme eines Heizelements angepasst ist. Bevorzugt weist der Trägerkörper auch innenliegende Längskanäle auf.

Der erfindungsgemäße Schichtladeheizstab ermöglicht es, einen Energiespeicher, z.B. einen Warmwasserbereiter oder Wärmetauscher, optimal mit Sonnenstrom über den ganzen Tag zu versorgen, ohne die Temperaturschichten des Wassers im Speicher zu verwirbeln und damit zu zerstören. Dadurch wird eine unerwünschte Mischtemperatur der unterschiedlichen Temperaturzonen im Speicher vermieden. Der Schichtladeheizstab ermöglicht, angepasst an die Geometrie des Speichers, eine Temperaturschichtung auch bei geringer Heizleistung von oben nach unten und bietet dadurch den Vorteil bei Betrieb mit erneuerbarer Energie diese optimal zu verwenden und gezielt einzusetzen, ohne die Temperaturen des Warmwassers am Speicheraustritt durch eine Vermischung unterschiedlicher Temperaturzonen im Warmwasserbereiter herabzusetzen.

Die Erfindung wird nun anhand von Ausführungsbeispielen unter Bezugnahme auf die Zeichnungen näher erläutert.
Fig. 1 zeigt schematisch einen erfindungsgemäßen elektrischen Heizstab in Seitenansicht.
Fig. 2 und Fig. 3 zeigen einen Trägerkörper eines erfindungsgemäßen elektrischen Heizstabs in Seitenansicht bzw. Draufsicht.
Fig. 4, 5 und 6 zeigen schematisch alternative Anordnungen von Heizelementen und Anschlussleitungen von Heizelementen des erfindungsgemäßen elektrischen Heizstabs.
Fig. 7 zeigt schematisch einen erfindungsgemäßen Energiespeicher im Längsschnitt.

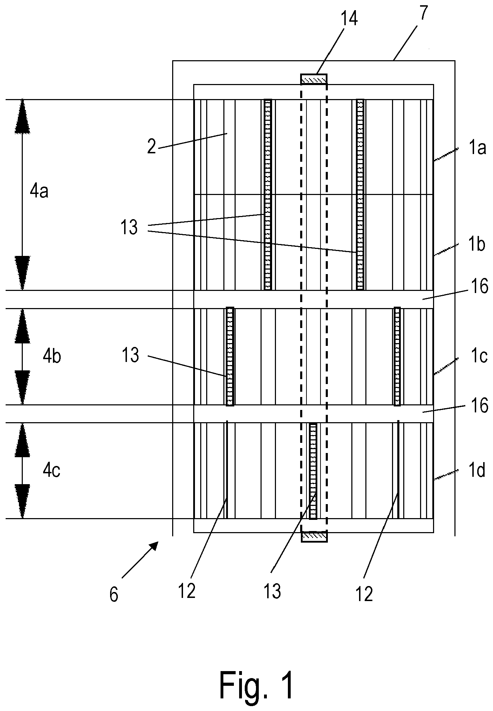

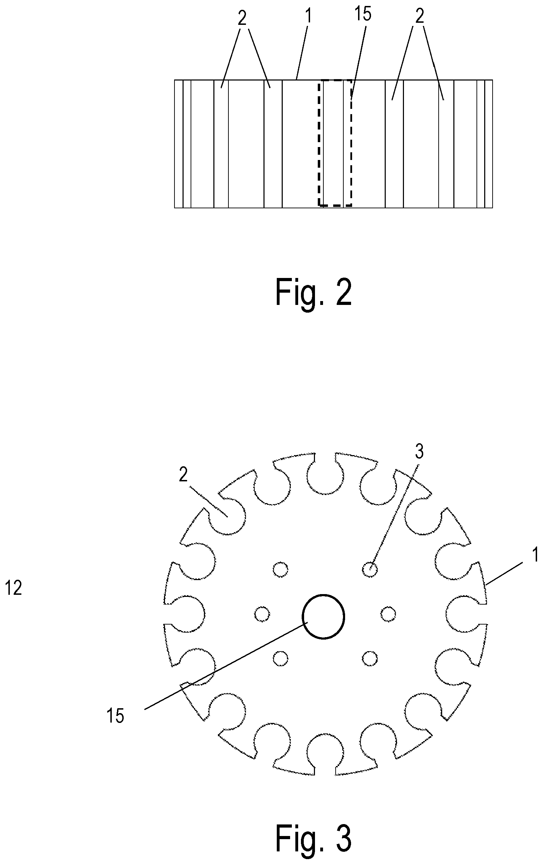

Unter Bezugnahme auf Fig. 1 wird nun eine Ausführungsform eines erfindungsgemäßen elektrischen Heizstabs 6 erklärt. Dieser elektrische Heizstab 6 weist unabhängig voneinander ansteuerbare Heizzonen 4a, 4b, 4c auf, die in Längserstreckung des Heizstabs 6 gesehen nacheinander bzw. in der vorgesehenen vertikalen Einbaulage des Heizstabs 6 in einem Wärmespeicher übereinander angeordnet sind. In jeder Heizzone 4a, 4b, 4c ist zumindest ein elektrisches Heizelement 13 angeordnet, und die elektrischen Heizelemente 13 unterschiedlicher Heizzonen 4a, 4b, 4c sind unabhängig voneinander mit elektrischer Energie versorgbar. Jede Heizzone 4a, 4b, 4c weist zumindest einen Trägerkörper 1a, 1b, 1c 1d aus einem elektrisch isolierenden und gegenüber den von den Heizelementen 13 erzeugten Temperaturen stabilen Material auf. Als Material wird vorzugsweise ein Keramikmaterial verwendet. Wie in Fig. 1 ersichtlich, weist beispielhaft die oberste Heizzone 4a zwei übereinander gestapelte modulare Trägerkörper 1a, 1b auf, wogegen die mittlere und die untere Heizzone 4b, 4c jeweils einen Trägerkörper 1c, 1d aufweisen. Zwischen den Trägerkörpern 1b, 1c und 1c, 1d sind Abstandshalter 16 angeordnet, die einerseits die Heizzonen 4a, 4b, 4c trennen und andererseits die Handhabung der Heizelemente 13 bei der Herstellung des elektrischen Heizstabs 6 erleichtern. Wie am besten in den Figuren 2 und 3 anhand des Trägerkörpers 1 ersichtlich, weist der Trägerkörper 1, 1a, 1b, 1c, 1d nach außen offene Längsnuten 2 auf, deren Querschnittsform zur Aufnahme eines Heizelements 13 angepasst ist. Weiters weist der Trägerkörper 1, 1a, 1b, 1c, 1d innenliegende Längskanäle 3 und ein Durchgangsloch 15 zur Aufnahme eines Verbindungsstabs 14 auf.

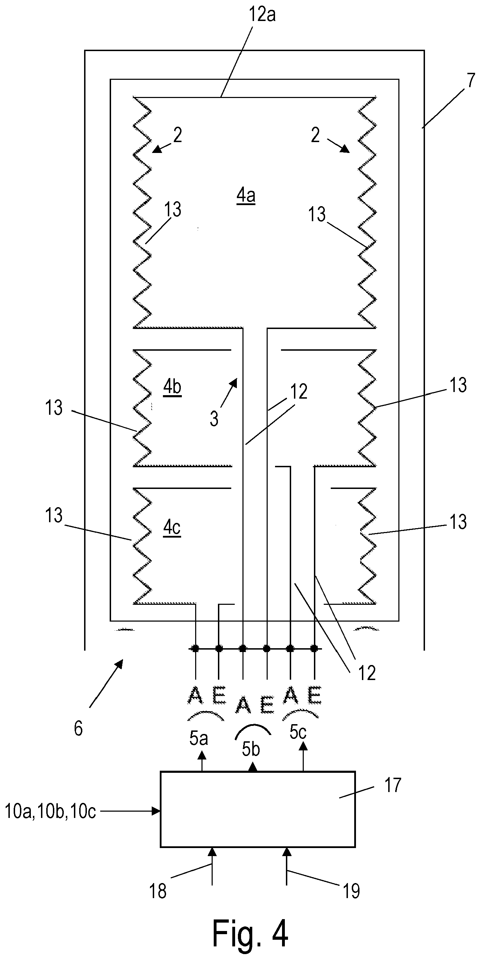

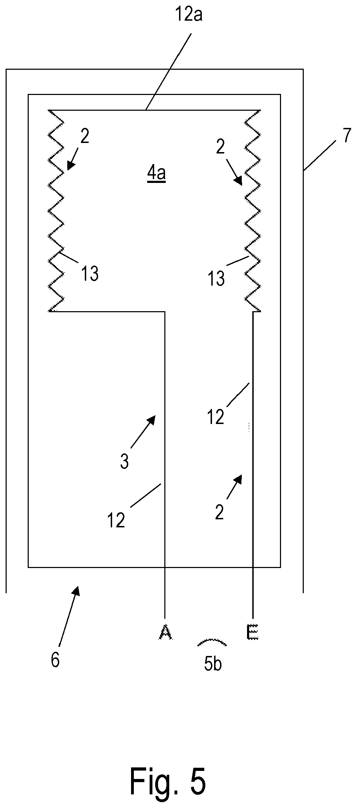

In der dargestellten Ausführungsform des erfindungsgemäßen elektrischen Heizstabs 6 ist das Heizelement 13 von einem spiralförmig gedrehten Heizdraht gebildet, der an seinen Enden Anschlussleitungen 12 aufweist. Der spiralförmig gedrehte Heizdraht, der das Heizelement 13 bildet, kann in Heizdrahtabschnitte unterteilt sein, die durch Verbindungsleitungen 12a (siehe Fig. 4, Fig. 5) miteinander verbunden sind. Bevorzugt sind der spiralförmig gedrehte Heizdraht des Heizelements 13, die Anschlussleitungen 12 und gegebenenfalls die Verbindungsleitungen 12a als ein einziger Draht ausgebildet. Man vermeidet dadurch thermische Probleme an den Verbindungsstellen zwischen Heizelement 13, Anschlussleitungen 12 und Verbindungsleitungen 12a, die bei separaten Teilen aufgrund von Verbindungswiderständen auftreten und bis zum Abschmoren der Elemente führen könnten. Außerdem ist die Herstellung des elektrischen Heizstabs 6 einfacher, wenn der spiralförmig gedrehte Heizdraht 13, die Anschlussleitungen 12 und gegebenenfalls die Verbindungsleitungen 12a als ein einziger Draht ausgebildet sind. Da dieser Draht ein elektrischer Widerstandsdraht ist, werden natürlich auch die Anschlussleitungen 12 und die Verbindungsleitungen 12a erwärmt. Diese Erwärmung ist jedoch gegenüber der Wärmeleistung des spiralförmig gedrehten Heizdrahts 13 vernachlässigbar, der aus einer Vielzahl an Heizwendeln besteht und dessen Gesamtlänge somit auch ein Vielfaches der linearen Anschlussleitungen 12 und Verbindungsleitungen 12a beträgt. Jeder spiralförmig gedrehte Heizdraht 13 ist in einer Längsnut 2 der Trägerkörper 1, 1a, 1b, 1c, 1d aufgenommen, woraus der kreisförmige Querschnitt der Längsnut 2 resultiert, wobei der sich vom kreisförmigen Querschnitt nach außen erstreckende Schlitz zur definierten Wärmeabstrahlung dient.

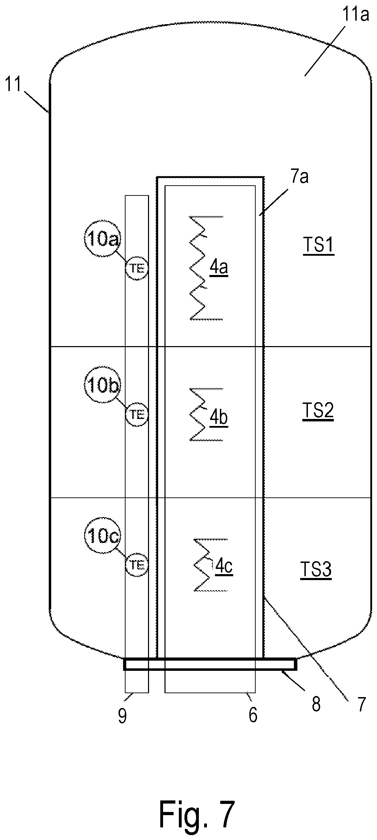

Der elektrische Heizstab 6 ist als modular aufgebaute Heizpatrone ausgebildet, die im Betrieb in einem Energiespeicher 11 (siehe Fig. 7) in einem Schutzrohr 7 angeordnet ist, um mit dem im Energiespeicher befindlichen flüssigen Medium nicht in direkten Kontakt zu kommen.

In Fig. 4 ist in Verbindung mit Fig. 1 schematisch die Anordnung der Heizdrähte 13 in verschiedenen Längsnuten 2 und der Anschlussleitungen 12 in verschiedenen Innenkanälen 3 gezeigt, sodass alle Anschlussleitungen 12 voneinander isoliert sind. Alternativ zur dargestellten Anordnung könnten die Anschlussleitungen 12 auch in Längsnuten 2 geführt sein. Verbindungsleitungen 12a sind quer über den Trägerkörper 1, 1a, 1b, 1c, 1d geführt. Da die oberste Heizzone 4a zwei übereinander gestapelte Trägerkörper 1a, b aufweist, ist sie doppelt so lang wie die beiden anderen Heizzonen 4b, 4c. Das heißt, dass auch die Heizelemente 13 in Form der Heizdrähte doppelt so lang sind und daher eine höhere Wärmeleistung abgeben. Grundsätzlich bestimmt die Anzahl der modularen Trägerkörper 1, 1a, 1b, 1c, 1d die Wärmeleistung und die Teilschichthöhe; die Anzahl der Trägerkörper 1, 1a, 1b, 1c, 1d wird daher je nach Bedarf festgelegt. Es sei aber an dieser Stelle erwähnt, dass gemäß der Erfindung zur Längenanpassung auch Trägerkörper vorgesehen sein können, die gar keine Heizelemente aufweisen, sondern nur Verbindungsleitungen 12a oder Anschlussleitungen 12. Ebenso wird nach Bedarf festgelegt, wie viele der vorhandenen Längsnuten 2 mit Heizelementen 13 bestückt werden. Die Anschlussleitungen 12 sind zu Klemmen A, E von Verbindungsstellen 5a, 5b, 5c geführt und an den Verbindungsstellen 5a, 5b, 5c mit einer Steuerungs-/Stromversorgungseinheit 17 verbunden, der weiters Signale von Temperaturfühlern 10a, 10b, 10c zugeführt werden, die nachfolgend noch näher beschrieben werden. Weiters ist die Steuerungs-/Stromversorgungseinheit 17 mit Eingangsanschlüssen 18, 19 für das Wechselstromnetz und Photovoltaik-Strom ausgestattet und weist Rechenmittel auf, um Steuerungsprogramme für die Steuerung des Energiespeichers in Abhängigkeit von den Signalen der Temperaturfühler und gegebenenfalls der Verfügbarkeit von Photovoltaik-Strom abzuarbeiten.

In Fig. 5 ist schematisch für die oberste Heizzone 4a dargestellt, dass die elektrischen Anschlussleitungen 12 alternativ auch in nicht mit Heizelementen 13 belegten Längsnuten 2 geführt werden können, wobei eine Anschlussleitung 12 in einem innenliegenden Längskanal 3 geführt ist. Die Anschlussleitungen 12 sind zu Klemmen A, E der Verbindungsstelle 5b geführt.

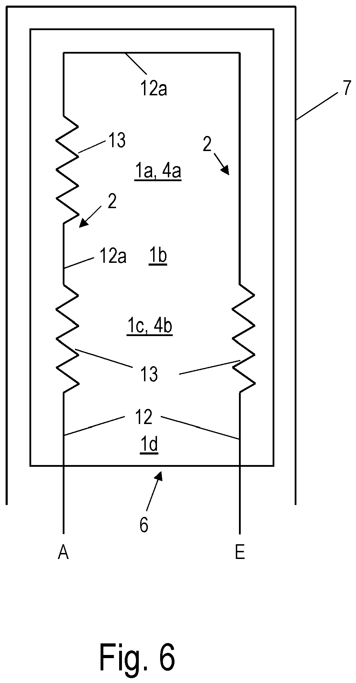

In Fig. 6 ist schematisch eine weitere Ausführungsform eines im Schutzrohr 7 positionierten Heizstabs 6 dargestellt. Dieser Heizstab 6 weist einen obersten Trägerkörper 1a auf, in dem ein Heizelement 13 in einer Längsnut 2 angeordnet ist, wodurch eine obere Heizzone 4a definiert wird. Im obersten Trägerkörper 1a ist auch eine Verbindungsleitungen 12a in einer Längsnut geführt. Unter dem obersten Trägerkörper 1a ist ein zweiter Trägerkörper 1b angeordnet, der nur eine Verbindungsleitung 12a in einer Längsnut 2 aufweist. Unter der zweiten Trägerkörper 1b ist ein dritter Trägerkörper 1c angeordnet, in dem zwei Heizelemente 13 positioniert sind, wodurch eine untere Heizzone 4b definiert wird. Unter dem dritten Trägerkörper 1c befindet sich noch ein vierter Trägerkörper 1d, der nur zur Führung der elektrischen Anschlussleitungen 12 in Längsnuten 12 dient. Die Anschlussleitungen 12 sind zu Klemmen A, E außerhalb des Heizstabs 6 geführt. Es wird darauf hingewiesen, dass alternativ zur dargestellten Ausführung die elektrischen Anschlussleitungen 12 und Verbindungsleitungen 12a auch in innenliegenden Längskanälen 3 geführt sein könnten.

Fig. 7 zeigt schematisch einen erfindungsgemäßen Energiespeicher 11 im Längsschnitt. Der Energiespeicher weist einen Innenraum 11a für zu erwärmendes bzw. warmzuhaltendes flüssiges Medium auf. Im Innenraum 11a des Energiespeichers 11 befindet sich ein Schutzrohr 7 mit einem Hohlraum 7a, der gegenüber dem Innenraum 11a flüssigkeitsdicht abgedichtet ist. Der elektrische Heizstab 6 ist von der Außenseite des Energiespeichers 11 zugänglich im Hohlraum 7a des Schutzrohrs 7 positioniert. Dadurch ist der Innenraum 7a in unterschiedliche Teilschichtbereiche TS1, TS2, TS3 unterteilt, wobei jeder Teilschichtbereich TS1, TS2, TS3 von einer Heizzone 4a, 4b, 4c des elektrischen Heizstabs 6 beheizbar ist. Weiters ist jeder Teilschichtbereich TS1, TS2, TS3 mit einem Temperaturfühler 10a, 10b, 10c ausgestattet, der die in den Teilschichtbereichen TS1, TS2, TS3 herrschenden Temperaturen TE misst. Die Signale der Temperaturfühler 10a, 10b, 10c werden an die Steuerungs-/Stromversorgungseinheit 17 weitergeleitet. Die Temperaturfühler 10a, 10b, 10c sind in einem Fühlerrohr 9 angeordnet, dass in den Innenraum 11a des Energiespeichers 11 ragt und das zusammen mit dem elektrischen Heizstab 6 auf einem gemeinsamen Flansch 8 angeordnet ist. Das Fühlerrohr 9 kann selbstverständlich auch direkt am Energiespeicher 11 eingeschweißt werden. Zusätzlich kann eine Opferanode, welche hier nicht dargestellt ist, vorgesehen werden. Es ist festzuhalten, dass der Energiespeicher natürlich auch mit aus dem Stand der Technik bekannten Einrichtungen ergänzt werden kann, die hier nicht dargestellt sind, weil sie nicht die Erfindung betreffen, wie z.B. eine Wendel, die zur Warmwasserbereitung über ein hydraulisch zugeführtes Heizmedium dient.

Unter Bezugnahme auf die Zeichnungen werden nun Funktion und Details des erfindungsgemäßen elektrischen Heizstabs 6 und des Energiespeichers 11 noch näher erläutert.

Der als Heizpatrone ausgeführte elektrische Heizstab 6 ermöglicht eine vertikal unterschiedliche Beheizung von Warmwasser in einem z.B. als Hängespeicher ausgebildeten Energiespeicher 11. Die Beheizung erfolgt durch eine vertikale temperaturgeschichtete Warmwassererwärmung von oben nach unten in den Teilschichtbereichen TS1, TS2, TS3. Der als eine Einheit ausgeführte elektrische Heizstab 6 kann unterschiedliche Heizzonen 4a, 4b, 4c entlang seiner Länge aktivieren und somit gezielt Teilschichtbereiche TS1, TS2, TS3 im Energiespeicher 11 beheizen. Die unterschiedlich beheizbaren Teilschichtbereiche TS1, TS2, TS3 werden entsprechend dem gewünschten Medium-Volumen ausgelegt. Die Heizzonen 4a, 4b 4c werden entsprechend der benötigten Wärmeleistung und Schichthöhe mit modularen Trägerkörpern 1, 1a, 1b, 1c dimensioniert. Durch die Anzahl aneinander gereihter Trägerkörper 1, 1a, 1b, 1c zu einer entsprechenden Gruppenlänge für diese Heizzone 4a, 4b, 4c und deren Bestückung mit Heizelementen 13 in Form von spiralförmig gedrehten Heizdrähten wird die Heizleistung im jeweiligen Teilschichtbereich TS1, TS2, TS3 bestimmt. Der elektrische Heizstab 6 kann anders als herkömmliche Tauchheizungen auch bei mit Medium voll befülltem Energiespeicher 11 entnommen bzw. getauscht werden. Dabei besteht der Trägerkörper 1, 1a, 1b, 1c vorzugsweise aus modular aneinander gereihten Keramikelementen, mit der Möglichkeit die elektrischen Anschlussleitungen 12 der Heizelemente 13 der Heizzonen 4a, 4b, 4c getrennt über innenliegende Längskanäle 3 der Trägerkörper 1, 1a, 1b, 1c zu führen. Die getrennt ansteuerbaren Heizzonen 4a, 4b, 4c enthalten Heizelemente 13, vorzugsweise in Form von spiralförmig gedrehten Heizdrähten, die sich an der Außenseite in einer speziell dem spiralgedrehten Heizdraht angepassten Längsnut 2 des Trägerkörpers 1 befinden und genau im jeweiligen Teilschichtbereich TS1, TS2, TS3 für die Schichttemperatur des Mediums im Energiespeicher 11 zuständig sind. Die unterschiedliche Anpassung der Heizleistung passend zum jeweiligen Volumen des Teilschichtbereichs TS1, TS2, TS3 erfolgt durch die modulare Aneinanderreihung der Trägerkörper 1, 1a, 1b, 1c entsprechend der jeweiligen Heizleistung und dem zu erwärmenden Teilschichtbereich TS1, TS2, TS3. Die Trägerkörper 1, 1a, 1b, 1c aller Heizzonen-Gruppen 4a, 4b, 4c, die jeweils für sich eine abgeschlossene Heizzone 4a, 4b, 4c darstellen, werden über Verbindungsstäbe 14 vertikal geführt bzw. verbunden und zu einer Heizpatroneneinheit verschraubt. Zur optimalen Anpassung der Teilschichthöhe bzw. Heizzonenleistung können Trägerkörper 1, 1a, 1b, 1c ohne Heizfunktion als Platzhalter mit beliebiger Höhe eingefügt werden. Es können auch Abstandshalter 16 aus Keramik oder dergleichen eingefügt werden. Entgegen dem Stand der Technik sind die Verbindungsstäbe 14, welche im Inneren der Trägerkörper 1, 1a, 1b, 1c geführt werden, vorzugsweise lösbar auf einer bestimmten Länge ausgeführt. Dadurch ist es möglich die modular aufgebaute Heizpatrone vor Ort bzw. geteilt in das Schutzrohr 7 einzuführen, um in Folge erst im Schutzrohr den elektrischen Heizstab 6 als eine Einheit zu verschrauben, was bei längerer Ausführung bzw. geringem Platz für Servicearbeiten von Vorteil ist. Aufgrund der Hitzeentwicklung bei Aktivierung der Heizzonen 4a, 4b, 4c wird vorzugsweise das Material Keramik für die Trägerkörper 1, 1a, 1b, 1c verwendet, da dieses eine sehr hohe Beständigkeit gegenüber den sich einstellenden Temperaturen aufweist und speziell die Formgebung der Längsnuten 2 zur Aufnahme des Heizdrahtes eine zu starke Erwärmung des Schutzrohres 7 durch einen definierten Abstand zwischen dem Trägerkörper 1 und dem Schutzrohr 7 verhindert. Die elektrisch getrennte Anbindung der Heizelemente 13 mit elektrisch voneinander isolierten Anschlussleitungen 12 zur individuellen Ansteuerung der Erwärmung der Teilschichtbereiche TS1, TS2, TS3 erfolgt mit demselben Draht, der auch als spiralförmig gedrehter Heizdraht in der Längsnut 2 für die schichtweise Beheizung des Mediums im Innenraum 11a des Energiespeichers 11 zuständig ist. Die Anschlussleitungen 12 werden in innenliegenden Längskanälen 3 oder in nicht mit spiralförmig gedrehtem Heizdraht belegten Längsnuten 2 von einer Heizzone 4a, 4b, 4c bis zu den Klemmen A, E von Anschlussstellen 5a, 5b, 5c geführt. Die Verwendung eines Drahtes ohne Unterbrechungsstellen, mit gleichem Durchmesser als Heizdraht 13 und gleichzeitig als elektrische Anschlussleitungen 12, geführt in getrennten innenliegenden Längskanälen 3 bzw. Längsnuten 2 pro Heizzone 4a, 4b, 4c zu den Klemmen A, E der Anschlussstellen5a, 5b, 5c bietet einen optimalen Schutz bezüglich der Hitzeeinwirkung und verhindert dadurch effektiv ein Abschmoren der Anschlussleitungen 12. Die Zusammenführung aller Anschlussleitungen 12 an einer zugänglichen Anschlussstelle 5a, 5b, 5c bzw. Kabelklemmstelle ermöglicht auch ein individuelles Aktivieren der unterschiedlich platzierten Heizzonen 4a, 4b, 4c und somit eine temperaturgeschichtete Warmwasserbereitung. Ein zusätzlicher Vorteil des erfindungsgemäßen elektrischen Heizstabs 11 gegenüber der bekannten Schichtbeladung mittels U-Form-Tauchheizstäben besteht darin, dass gemäß der Erfindung keine mehrfachgereihten Tauchstäbe mit geringem Abstand voneinander vorhanden sind, die viel eher zu einer Kalkbrückenausbildung neigen als das alleinstehende, mit dem elektrischen Heizstab 6 bestückte Schutzrohr 7. Zusätzlich neigt die Kombination aus dem erfindungsgemäßen elektrischen Heizstab 6 und dem Schutzrohr generell aufgrund der geringeren Heizleistung pro Flächeneinheit zu einer geringeren Kalkabscheidung als das System mit Tauchheizkörpern.

Die Warmwasserbereitung erfolgt vorzugsweise für einen ca. 140l bis 160l Hänge-Energiespeicher 11, da dieser bei durchschnittlicher Warmwasserentnahme über ein angemessenes Speichervolumen sowohl für die Produktion von Warmwasser mit Sonnenstrom als auch über ein jederzeit bereitzustellendes Warmwasser-Komfortvolumen verfügt. Der Energiespeicher 11 wird vorzugsweise in drei Heizzonen 4a, 4b, 4c unterteilt. Die oberste Heizzone 4a heizt den Teilschichtbereich TS1, der das Komfortvolumen bildet, und wird mit einer höheren Heizleistung, vorzugsmäßig bis ca. 1000W, ausgestattet. Die Komfortzone wird vorzugsweise über einen Schaltthermostat bzw. die temperaturgeführte Steuerungs-/Stromversorgungseinheit 17 ständig auf der Sollspeichertemperatur gehalten. Die weiteren Teilschichtbereiche TS2, TS3 werden von zugeordneten weiteren Heizzonen 4b und 4c beheizt, die jeweils mit ca. 500W Heizleistung ausgestattet sind. Die Steuerung dieser zwei weiteren Heizzonen 4b, 4c erfolgt vorzugsweise durch eine sogenannte Photovoltaik-Freigabe, d.h. Freigabe zu Zeiten, an denen mit einer Sonnenstrahlung zu rechnen ist. Die Photovoltaik-Freigabe erfolgt jedoch vorzugsweise seriell, d.h. erst, wenn die zweite Heizzone 4b den ihr zugeordneten Teilschichtbereich TS2 auf Solltemperatur gebracht hat, erfolgt die Freigabe der dritten Heizzone 4c.

## Patentansprüche

1. Elektrischer Heizstab (6) für einen Energiespeicher (11), wobei der elektrische Heizstab (6) unabhängig voneinander ansteuerbare Heizzonen (4a, 4b, 4c) aufweist, die in Längserstreckung des Heizstabs (6) gesehen nacheinander angeordnet sind, wobei in jeder Heizzone (4a, 4b, 4c) zumindest ein elektrisches Heizelement (13) angeordnet ist und die elektrischen Heizelemente (13) unterschiedlicher Heizzonen unabhängig voneinander mit elektrischer Energie versorgbar sind, **dadurch gekennzeichnet, dass** jede Heizzone (4a, 4b, 4c) zumindest einen Trägerkörper (1, 1a, 1b, 1c) aus einem elektrisch isolierenden und gegenüber den von den Heizelementen (13) erzeugten Temperaturen stabilen Material aufweist, wobei der Trägerkörper (1, 1a, 1b, 1c) nach außen offene Längsnuten (2) aufweist, deren Querschnittsform zur Aufnahme eines Heizelements (13) angepasst ist.

2. Elektrischer Heizstab nach Anspruch 1, **dadurch gekennzeichnet, dass** der Trägerkörper (1, 1a, 1b, 1c) innenliegende Längskanäle (3) aufweist.

3. Elektrischer Heizstab nach Anspruch 1 oder 2, **dadurch gekennzeichnet, dass** der Trägerkörper (1, 1a, 1b, 1c) ein Durchgangsloch (15) zur Aufnahme eines Verbindungsstabs (14) aufweist.

4. Elektrischer Heizstab nach einem der vorhergehenden Ansprüche, **dadurch gekennzeichnet, dass** der Trägerkörper (1, 1a, 1b, 1c) aus einem Keramikmaterial besteht.

5. Elektrischer Heizstab nach einem der vorhergehenden Ansprüche, **dadurch gekennzeichnet, dass** das Heizelement (13) von einem spiralförmig gedrehten Heizdraht gebildet ist.

6. Elektrischer Heizstab nach Anspruch 5, **dadurch gekennzeichnet, dass** der spiralförmig gedrehte Heizdraht Anschlussleitungen (12) aufweist.

7. Elektrischer Heizstab nach Anspruch 5 oder 6, **dadurch gekennzeichnet, dass** der spiralförmig gedrehte Heizdraht in Heizdrahtabschnitte unterteilt ist, die durch Verbindungsleitungen (12a) miteinander verbunden sind.

8. Elektrischer Heizstab nach einem der Ansprüche 5 bis 7, **dadurch gekennzeichnet, dass** der spiralförmig gedrehte Heizdraht, die Anschlussleitungen (12) und gegebenenfalls die Verbindungsleitungen (12a) als ein einziger Draht ausgebildet sind.

9. Elektrischer Heizstab nach einem der Ansprüche 5 bis 8, **dadurch gekennzeichnet, dass** der spiralförmig gedrehte Heizdraht in einer Längsnut (2) des Trägerkörpers (1, 1a, 1b, 1c) aufgenommen ist.

10. Elektrischer Heizstab nach einem der Ansprüche 6 bis 9, **dadurch gekennzeichnet, dass** zumindest eine der Anschlussleitungen (12) und/oder zumindest eine Verbindungsleitung (12a) in einer Längsnut (2) des Trägerkörpers (1, 1a, 1b, 1c) geführt ist.

11. Elektrischer Heizstab nach einem der Ansprüche 6 bis 10, **dadurch gekennzeichnet, dass** zumindest eine der Anschlussleitungen (12) und/oder zumindest eine Verbindungsleitung (12a) in einem innenliegenden Längskanal (3) des Trägerkörpers (1, 1a, 1b, 1c) geführt ist.

12. Elektrischer Heizstab nach einem der Ansprüche 5 bis 11, **dadurch gekennzeichnet, dass** die Anschlussleitungen (12) zu einer elektrischen Verbindungsstelle (5a, 5b, 5c) geführt sind.

13. Energiespeicher (11), mit einem Innenraum (11a) für zu erwärmendes bzw. warmzuhaltendes flüssiges Medium, **dadurch gekennzeichnet, dass** der Energiespeicher (11) zumindest einen elektrischen Heizstab (6) nach einem der Ansprüche 1 bis 12 aufweist, wodurch der Innenraum (11a) in unterschiedliche Teilschichtbereiche (TS1, TS2, TS3) unterteilt ist, wobei jeder Teilschichtbereich (TS1, TS2, TS3) von einer Heizzone (4a, 4b, 4c) des elektrischen Heizstabs (6) beheizbar ist.

14. Energiespeicher nach Anspruch 13, **dadurch gekennzeichnet, dass** im Innenraum (11a) des Energiespeichers (11) ein Schutzrohr (7) mit einem Hohlraum (7a) angeordnet ist, der gegenüber dem Innenraum (11a) flüssigkeitsdicht abgedichtet ist, wobei der elektrische Heizstab (6) von der Außenseite des Energiespeichers (11) zugänglich im Hohlraum (7a) des Schutzrohrs (7) positionierbar ist.

15. Energiespeicher nach Anspruch 13 oder 14, **dadurch gekennzeichnet, dass** jeder Teilschichtbereich (TS1, TS2, TS3) mit einem Temperaturfühler (10a, 10b, 10c) ausgestattet ist.

16. Energiespeicher nach Anspruch 15, **dadurch gekennzeichnet, dass** die Temperaturfühler (10a, 10b, 10c) in einem im Innenraum (11a) des Energiespeichers (11) angeordneten Fühlerrohr (9) angeordnet sind.

17. Energiespeicher nach einem der Ansprüche 15 oder 16, **dadurch gekennzeichnet, dass** der Energiespeicher (11) mit einer Steuerungs-/Stromversorgungseinheit (17) ausgestattet ist, der die Signale der Temperaturfühler (10a, 10b, 10c) zugeführt werden, die mit Eingangsanschlüssen (18, 19) für das Stromnetz und/oder Photovoltaik-Strom ausgestattet ist, die mit Stromversorgungsanschlüssen versehen ist, die mit der elektrischen Verbindungsstelle (5a, 5b, 5c) des elektrischen Heizstabs (6) verbunden sind, und die Thermostatschaltungen und/oder mit Rechenmitteln ausgestattet ist, um Steuerungsprogramme für die Steuerung des Energiespeichers in Abhängigkeit von den Signalen der Temperaturfühler und gegebenenfalls der Verfügbarkeit von Photovoltaik-Strom abzuarbeiten.

18. Energiespeicher nach einem der Ansprüche 13 bis 17, **dadurch gekennzeichnet, dass** der Energiespeicher (11) als Warmwasserbereiter ausgebildet ist.

19. Energiespeicher nach einem der Ansprüche 13 bis 18, **dadurch gekennzeichnet, dass** der Energiespeicher (11) als Wärmetauscher ausgebildet ist.

## Claims

1. An electric heating rod (6) for an energy storage (11), the electric heating rod (6) having heating zones (4a, 4b, 4c) that are controllable independently of each other and are arranged sequentially, when viewed in the longitudinal extension of the heating rod (6), wherein at least one electric heating element (13) is arranged in each heating zone (4a, 4b, 4c) and the electric heating elements (13) of different heating zones can be supplied with electric energy independently of each other, **characterized in that** each heating zone (4a, 4b, 4c) has at least one carrier body (1, 1a, 1b, 1c) made of a material that is electrically insulating and stable against the temperatures generated by the heating elements (13), the carrier body (1, 1a, 1b, 1c) having longitudinal grooves (2) open towards the outside, the cross-sectional shape of which is adapted for receiving a heating element (13).

2. The electric heating rod according to claim 1, **characterized in that** the carrier body (1, 1a, 1b, 1c) has internal longitudinal channels (3).

3. The electric heating rod according to claim 1 or 2, **characterized in that** the carrier body (1, 1a, 1b, 1c) has a through hole (15) for receiving a connecting rod (14).

4. The electric heating rod according to any of the preceding claims, **characterized in that** the carrier body (1, 1a, 1b, 1c) is made of a ceramic material.

5. The electric heating rod according to any of the preceding claims, **characterized in that** the heating element (13) is formed by a spirally twisted heating wire.

6. The electric heating rod according to claim 5, **characterized in that** the spirally twisted heating wire comprises connection lines (12).

7. The electric heating rod according to claim 5 or 6, **characterized in that** the spirally twisted heating wire is divided into heating wire sections which are interconnected by connecting lines (12a).

8. The electric heating rod according to any of claims 5 to 7, **characterized in that** the spirally twisted heating wire, the connection lines (12) and optionally the connecting lines (12a) are designed as a single wire.

9. The electric heating rod according to any of claims 5 to 8, **characterized in that** the spirally twisted heating wire is received in a longitudinal groove (2) of the carrier body (1, 1a, 1b, 1c).

10. The electric heating rod according to any of claims 6 to 9, **characterized in that** at least one of the connection lines (12) and/or at least one connecting line (12a) is/are routed in a longitudinal groove (2) of the carrier body (1, 1a, 1b, 1c).

11. The electric heating rod according to any of claims 6 to 10, **characterized in that** at least one of the connection lines (12) and/or at least one connecting line (12a) is/are routed in an internal longitudinal channel (3) of the carrier body (1, 1a, 1b, 1c).

12. The electric rod element according to any of claims 5 to 11, **characterized in that** the connection lines (12) are routed to an electrical connection point (5a, 5b, 5c).

13. An energy storage (11) with an interior (11a) for liquid medium to be heated or, respectively, to be kept warm, **characterized in that** the energy storage (11) comprises at least one electric heating rod (6) according to any of claims 1 to 12, whereby the interior (11a) is divided into different sub-layer areas (TS1, TS2, TS3), each sub-layer area (TS1, TS2, TS3) being heatable by a heating zone (4a, 4b, 4c) of the electric heating rod (6).

14. The energy storage according to claim 13, **characterized in that**, in the interior (11a) of the energy storage (11), a protective tube (7) with a cavity (7a) sealed in a fluid-tight manner against the interior (11a) is arranged, wherein the electric heating rod (6) can be positioned in the cavity (7a) of the protective tube (7) so that it is accessible from the outside of the energy storage (11).

15. The energy storage according to claim 13 or 14, **characterized in that** each sub-layer area (TS1, TS2, TS3) is equipped with a temperature sensor (10a, 10b, 10c).

16. The energy storage according to claim 15, **characterized in that** the temperature sensors (10a, 10b, 10c) are arranged in a sensor tube (9) arranged in the interior (11a) of the energy storage (11).

17. The energy storage according to any of claims 15 or 16, **characterized in that** the energy storage (11) is equipped with a control/power supply unit (17) which is supplied with the signals of the temperature sensors (10a, 10b, 10c), which is equipped with input terminals (18, 19) for the electrical grid and/or photovoltaic power, which is provided with power supply terminals connected to the electrical connection point (5a, 5b, 5c) of the electric heating rod (6), and which is equipped with thermostat circuits and/or with computing means in order to execute control programs for controlling the energy storage depending on the signals of the temperature sensors and, if applicable, on the availability of photovoltaic power.

18. The energy storage according to any of claims 13 to 17, **characterized in that** the energy storage (11) is designed as a water heater.

19. The energy storage according to any of claims 13 to 18, **characterized in that** the energy storage (11) is designed as a heat exchanger.

## Revendications

1. Barre chauffante électrique (6) pour un accumulateur d'énergie (11), la barre chauffante électrique (6) comportant des zones chauffantes (4a, 4b, 4e) qui peuvent être commandées indépendamment les unes des autres et qui sont disposées les unes derrière les autres dans le sens de la longueur de la barre chauffante (6), dans laquelle au moins un élément chauffant électrique (13) est disposé dans chaque zone chauffante (4a, 4b, 4e) et dans laquelle les éléments chauffants électriques (13) de différentes zones chauffantes peuvent être alimentés en énergie électrique indépendamment les uns des autres, **caractérisée en ce que** chaque zone chauffante (4a, 4b, 4e) comporte au moins un corps de support (1, 1a, 1b, 1e) qui est réalisé en un matériau électriquement isolant et stable vis-à-vis des températures générées par les éléments chauffants (13), et dans lequel le corps de support (1, 1a, 1b, 1e) présente des rainures longitudinales (2) ouvertes vers l'extérieur dont la forme de la section transversale est adaptée pour recevoir un élément chauffant (13).

2. Barre chauffante électrique selon la revendication 1, **caractérisée en ce que** le corps de support (1, 1a, 1b, 1e) présente des canaux longitudinaux internes (3).

3. Barre chauffante électrique selon la revendication 1 ou 2, **caractérisée en ce que** le corps de support (1, 1a, 1b, 1e) comporte un trou traversant (15) qui est destiné à recevoir une tige de liaison (14).

4. Barre chauffante électrique selon l'une quelconque des revendications précédentes, **caractérisée en ce que** le corps de support (1, 1a, 1b, 1e) est réalisé en un matériau céramique.

5. Barre chauffante électrique selon l'une quelconque des revendications précédentes, **caractérisée en ce que** l'élément chauffant (13) est formé par un fil chauffant torsadé en spirale.

6. Barre chauffante électrique selon la revendication 5, **caractérisée en ce que** le fil chauffant torsadé en spirale comprend des lignes de raccordement (12).

7. Barre chauffante électrique selon la revendication 5 ou 6, **caractérisée en ce que** le fil chauffant torsadé en spirale est divisé en sections de fil chauffant qui sont reliées entre elles par des lignes de connexion (12a).

8. Barre chauffante électrique selon l'une quelconque des revendications 5 à 7, **caractérisée en ce que** le fil chauffant torsadé en spirale, les lignes de raccordement (12) et optionnellement les fils de connexion (12a) sont réalisés sous la forme d'un fil unique.

9. Barre chauffante électrique selon l'une quelconque des revendications 5 à 8, **caractérisée en ce que** le fil chauffant torsadé en spirale est reçu à l'intérieur d'une rainure longitudinale (2) du corps de support (1, 1a, 1b, 1e).

10. Barre chauffante électrique selon l'une quelconque des revendications 6 à 9, **caractérisée en ce qu'**au moins une des lignes de raccordement (12) et/ou au moins une ligne de connexion (12a) est/sont guidée(s) dans une rainure longitudinale (2) du corps de support (1, 1a, 1b, 1e).

11. Barre chauffante électrique selon l'une quelconque des revendications 6 à 10, **caractérisée en ce qu'**au moins une des lignes de raccordement (12) et/ou au moins une ligne de connexion (12a) est/sont guidée(s) dans un canal longitudinal interne (3) du corps de support (1, 1a, 1b, 1e).

12. Barre chauffante électrique selon l'une quelconque des revendications 5 à 11, **caractérisée en ce que** les lignes de raccordement (12) sont guidées vers un point de jonction électrique (5a, 5b, 5c).

13. Accumulateur d'énergie (11), comprenant un espace intérieur (11a) pour un milieu liquide à chauffer ou à maintenir chaud, **caractérisé en ce que** l'accumulateur d'énergie (11) comprend au moins une barre chauffante électrique (6) selon l'une quelconque des revendications 1 à 12, dans lequel l'espace intérieur (11a) est divisé en différentes zones de sous-couche (TSI, TS2, TS3), et dans lequel chaque zone de sous-couche (TS1, TS2, TS3) peut être chauffée par l'intermédiaire d'une zone chauffante (4a, 4b, 4c) de la barre chauffante électrique (6).

14. Accumulateur d'énergie selon la revendication 13, **caractérisé en ce qu'**un tube de protection (7) comportant une cavité (7a) qui est étanche aux liquides par rapport à l'espace intérieur (11a) est disposé dans l'espace intérieur (11a) de l'accumulateur d'énergie (11), dans lequel la barre chauffante électrique (6) peut être positionnée à l'intérieur de la cavité (7a) du tube de protection (7) tout en restant accessible depuis l'extérieur de l'accumulateur d'énergie (11).

15. Accumulateur d'énergie selon la revendication 13 ou 14, **caractérisé en ce que** chaque zone de sous-couche (TSI, TS2, TS3) est équipée d'une sonde de température (10a, 10b, 10c).

16. Accumulateur d'énergie selon la revendication 15, **caractérisé en ce que** les sondes de température (10a, 10b, 10c) sont disposées à l'intérieur d'un tube de sonde (9) agencé dans l'espace intérieur (11a) de l'accumulateur d'énergie (11).

17. Accumulateur d'énergie selon l'une quelconque des revendications 15 ou 16, **caractérisé en ce que** l'accumulateur d'énergie (11) est équipé d'une unité de commande/alimentation électrique (17) à laquelle les signaux en provenance des sondes de température (10a, 10b, 10c) sont envoyés et qui est pourvue de bornes d'entrée (18, 19) pour le réseau électrique et/ou l'électricité photovoltaïque, qui est pourvue de bornes d'alimentation électrique connectées au point de jonction électrique (5a, 5b, 5c) de la barre chauffante électrique (6), et qui est pourvue de circuits thermostatiques et/ou de moyens de calcul pour exécuter des programmes de commande afin de commander l'accumulateur d'énergie sur la base des signaux reçus en provenance des sondes de température ainsi que, le cas échéant, de la disponibilité de l'électricité photovoltaïque.

18. Accumulateur d'énergie selon l'une quelconque des revendications 13 à 17, **caractérisé en ce que** l'accumulateur d'énergie (11) est conçu sous la forme d'un chauffe-eau.

19. Accumulateur d'énergie selon l'une quelconque des revendications 13 à 18, **caractérisé en ce que** l'accumulateur d'énergie (11) est conçu sous la forme d'un échangeur de chaleur.
